# EUROPEAN PATENT SPECIFICATION

(11) **EP 2 457 030 B1**
(45) Date of publication and mention of the grant of the patent: **16.05.2018**
(21) Application number: 10801822.7
(22) Date of filing: 19.07.2010
(51) Int. Cl.: F24J 2/02, A47J 37/00, F24J 2/05, A47J 37/06, F24J 2/34, F24J 2/46

(54) **SOLAR COOKING RANGE AND APPLIANCES**
SOLARKOCHFELD UND ANWENDUNGEN DAMIT
CUISINIÈRE ET APPAREILS DE CUISSON SOLAIRES

(30) Priority: 23.07.2009 CA 2673702
(43) Date of publication of application: 30.05.2012
(73) Proprietor: LIN, Huazi, Richmond Hill, ON L4S 1H2 (CA); W&E International (Canada) Corp., Richmond Hill, Ontario L4S 1H2 (CA)
(72) Inventor: LIN, Huazi, Richmond Hill, ON L4S 1H2 (CA)
(74) Representative: Tomkinson, Alexandra
(86) International application number: PCT/CA2010/001120
(87) International publication number: WO 2011/009201

(56) References cited:
- CN-Y- 2 265 509
- CN-Y- 201 206 904
- DE-A1- 4 142 119
- JP-A- H 074 751
- Various: "Solar Cookers in the Third World (GTZ, 1990, 228 p.): Appendix 1: Solar Cooking Devices: Heat-accumulatinq solar cookers" In: "Solar Cookers in the Third World (GTZ, 1990, 228 p.): Appendix 1: Solar Cooking Devices: Heat-accumulatinq solar cookers", 31 December 1990 (1990-12-31), GTZ Gesellschaft für technische Zusammenarbeit, XP055144175, page 228, * the whole document *
- MULLER, HEINZ-JOACHIM: 'Solar Steam Cooker' 46TH ANZSES (AUSTRALIAN AND NEW ZEALAND SOLAR ENERGY SOCIETY) CONFERENCE [ONLINE], ISES-AP 2008, [Online] 2008, XP008151178 Retrieved from the Internet: <URL:http://www.sun2steam.com.au/solarcooke r/cooker.pdf> [retrieved on 2010-10-12]

## Description

The present disclosure relates to solar heat application field, especially relates to solar cooking appliances to cook the foods in a range that receives and stores solar heat from a solar heat collector. It also relates to solar heating water and an electric energy storage range.

### BACKGROUND

For all kinds of existing energy sources in the earth, solar energy is the most widespread, the richest and the most uniformly distributed energy source. Solar energy can be used very easily. It is available every day, everywhere and for every body.

For all kinds of human energy consuming activities, food and beverage cooking is the most often activity and has the longest history. Every body in anywhere needs to cook the foods every day.

It is very interesting and valuable topic to use solar energy for food cooking. There are many efforts in this field. (Please refer to the existing patents).

The solar power on a unit earth area is not very large. The solar radiation intensity is varied from North to South and from morning to afternoon. It depends on the weather and is also different in four seasons, so that to develop a economic solar cooking appliance is always a challenge and need continue efforts.

In view of these difficulties, some solar cooking appliances tried to make the sunlight receiving area as large as possible. But the heat insulation for the received heat is difficult. Some solar cooking appliances follow and focus the sunlight using expensive automation system and need additional power to run the system. Some solar cooking appliances also use the heat storage materials. The materials may be expensive and not easy to get.

At present time, electric power demand management becomes more popular.

One of the management methods is to store the electric heat at the lower power demand period for the use at the high demand period. The solar coking range of this invention can be large heat energy storage and has very good heat insulation, so it is also an electric heat storage container for electric demand management purpose.

The present disclosure absorbs the historic experience and combines the new solar water heating technologies and developed a set of economic and practicable solar cooking appliances.

"Solar Cookers in the Third World (GTZ, 1990, 228 p.) Appendix 1: Solar Cooking Devices: Heat-accumulating solar cookers", 31 December 1990 (1990-12.31), GTZ Gesellschaft fur technische Zusammenarbeit, XP055144175, p 228, discloses various solar cooking stove arrangements with different forms of heat collectors.

CN2265509 discloses a vacuum pipe solar energy steam heated water heater. The steam can be used to cook food.

JPH074751 discloses a cooking table with a solar heat collector. The solar heat collector collects heat to heat a medium and the heat is transferred to a cooking table.

DE4142119 discloses a solar cooker with a collector for heating medium. The cooker has several hobs to which the heated medium is supplied. The hobs are container forming saucepans surrounded by a hollow void through which the medium flows.

Muller, Heinz-Joachim "Solar Steam Cooker", 46th Anzses (Australian and New Zealand Solar Energy Society) Conference [Online], ISES-AP 2008,XP008151178 discloses a solar steam cooker.

CN201206904 discloses a solar cooker water heater. It comprises a heat collecting water tank and a pot stove.

### SUMMARY

The object of this disclosure is to improve the existing technologies and provide a set of solar cooking appliances that is economic, easy to manufacture and use and highly efficient. The invention takes the following steps to overcome the difficulties of applying solar energy for food cooking:

To use the evacuated solar heat collector for optimum heat collecting;

To fill heat storage and conducting material in the evacuated solar heat collector for storing and keeping heat to provide a continued and stable cooking heat;

A light reflector focuses the surrounding light to the cooking appliances;

A sundial indicates the light direction, an adjustable and rotatable fixing and supporting trestle allows the appliance to receive the highest solar power;

An electric power supply provides a backup power source when the solar power is not enough. Further more, the solar cooking appliances also provide backup or energy storage equipment at low electricity price period for cooking at electric power outage.

Following are the detailed summary of present disclosure.

In accordance with one aspect of the present disclosure there is provided a set of solar cooking appliances, comprising: a solar heat collector to collect and store solar heat; a first heat storage and conducting material placed in the solar heat collector, wherein said solar heat collector can heat said heat storage and conducting material to a temperature higher than the water boiling temperature, a solar cooking range having a heat insulated and enclosed compartment and a cooktop, asecond heat storage and conducting material placed in the heat insulated and enclosed compartment, and said solar cooking range/stove thermally connected with said solar heat collector to receive and store solar heat for food cooking,a set of cooking chambers arranged in said enclosed compartment and located in said second heatstorage and conducting material; aheat- transferring medium thermally connecting said solar heat collector to said second heat storage and conducting material in said solar cooking range to transfer the solar heat; a set of solar cooking utensils with heat insulated covers, said cooking utensils located in the cooking chambers of said solar cooking range/stove, characterised in that an electric heat element is arranged in said range/stove to provide a backup energy source and electric heat storing, and a or the utensils have a heat insulated coat sized to fit the inner size and shape of the solar cooking chambers.

The said solar heat collector is a evacuated-tube solar heat collector or a group of evacuated-tube solar heat collectors; or a group of modular evacuated-tube solar heat collectors that mounted in a certain shape, e.g. in parallel row or column in full or partial cone-shaped; for safety reason, a evacuated toughened-glass tube solar heat collector or a transparent cover is suggested.

The evacuated-tube solar heat collector may have one open end or two open ends. The one or two open end(s) may be extended into the solar cooking range, or connected to the cooking range by heat transferring medium(s) or heat exchanger to transfer the solar heat to the solar cooking range.

The first and/or second heat storage and conducting material can be either one of a solid material including ore, metal, alloy, turves, soil, quartz sand, or graphite; or a liquid material including water, oil, petroleum including heating oil, fuel oil, transformer oil; cooking oil including colza oil, bean oil; or head storage chemical or phase change heat storage material, e.g. CaO plus H2O or paraffin; or a combination material of two or more heat storage and conducting materials, e.g. oil filled in the quartz sand or plumbaginous paraffin (graphite and paraffin).

The said solar cooking range can comprise a heat exchanger arranged in said enclosed compartment of the solar cooking range, and surrounded by said heat storage and conducting material wherein; said heat exchanger having the ends connected to the fittings on the wall of said cooking range for receiving the solar heat from the solar heat collector; the solar cooking range may further comprise a heat insulated coating on the surface of said enclosed compartment or a removable heat insulation greatcoat; the solar cooking range may also comprise a structure for breathing and expansion of the heat storage and conducting material within said enclosed compartment; said structure is a hole and fitting on the top of said enclosed compartment open to atmosphere; or is an expansible subject located in said enclosed compartment, e.g. a piece of bubble plastic or a polymeric empty stomach ball.

The heat insulated and enclosed compartment of solar cooking range can be an airtight compartment with receiving fittings for receiving heat tubes from the solar heat collector; It can be made by metal e.g. steal or copper; or by alloy e.g. stainless steal or aluminum alloy; or by heat resistant material, e.g. ceramic, concrete, brick or soil; The heat insulated and enclosed compartment of the solar cooking range having a receiving fitting to receive a tube from a solar heat collector.

In the group of cooking chambers, each cooking chamber can be enclosed by heat conductive material, e.g. stainless steel or copper, for separating the heat storage and conducting material from the cooking utensil; The shapes of the said cooking chambers can be a cylinder bucket shape or a hemisphere shape or others.

The solar cooking range may include a built-in oven with a door and a watch window and a removable drawer filled with said heat storage and conducting material and located in said oven when the oven is out of service;

The enclosed compartment of the solar cooking range may comprise a hot water tube surrounded by heat storage and conducting material for using remaining heat to make hot water after cooking; said water tube having one end connected to a inlet fitting and the opposite end connected to an outlet fitting on the wall of the solar cooking range, said fittings are for receiving tubes from hot water appliance.

The heat-transferring medium can comprise a heat tube with or without the contacting fins, having its one end in said solar heat collector and another end extended into said solar heating range; or a group of heat tubes, wherein each tube connects said solar heating range with one solar heat collector respectively; or a metal conductor, e.g. copper or aluminum conductor; or a metal wall of said solar cooking range,

For the solar cooking utensils, each utensil can be inlayed fully in one of said cooking chambers in said solar cooking range and has the size and shape matched with the size and shape of at least one of said cooking chambers; wherein each utensil has a lower part and an upper part, said lower part can be inlayed in one of said cooking chambers and has its size and shape matched with the size and shape of at least one of said cooking chambers, said upper part having a head insulation greatcoat.

The solar cooking utensils can comprise a cylinder container made of stainless steel or glass; or a hemisphere container made of stainless steel or glass; and a two layer toughened glass lid.

For the group of cooking chambers, every cooking chamber can have a standard module size and shape; each of said utensils has a heat conductive coat having its inside size and shape matched with the outside size and shape of said utensil, and its outside size and shape matches the inside size and shape of said standard module cooking chamber in said solar cooking range; wherein each heat insulation part covers one top of said group of cooking chambers, when the cooking chamber is either in use or out of service; each heat insulation part inserts and is fully filled in one of said group of cooking chambers when it is out of service.

The accessories can comprise a fixing and supporting trestle that arranges and supports each part of the solar cooking appliances at a proper situation; the trestle has a structure that allows the adjustment to the incidence angle to the sun light for said solar heat collector and another structure that allows the adjustment to the direction of the solar heat collector to the sun light, e.g. a rotatable base. The accessories further comprise a light reflecting object that focus the surrounding sun light to the solar heat collector; a sundial, e.g. a cone bar attached to the solar heat collector perpendicularly for indicate the incidence angle of sun light; a bag and/or membrane for wrap up or cover the food in the solar cooking appliance, e.g. metal, paper or plastic bag and membrane; a set of wheels.

The solar cooking appliances can further comprise: a set of electric power heat elements with power supply at the bottom of each cooking chamber and in the oven; an electric power heat element with power supply comprising: a power cable having very high heat-resistant temperature, the measurement and indication devices for measuring and indicating the solar cooking appliance's operating characteristic parameters, e.g. timing, temperature, pressure, moisture etc.

Other aspects and features of the present disclosure will become apparent to those ordinarily skilled in the art upon review of the following description of specific embodiments of the invention in conjunction with the accompanying figures.

### BRIEF DESCRIPTION OF THE DRAWINGS

Fig. 1 (which does not show the back up electric heating element of the present invention) is schematic side view of a set of exemplary solar cooking appliances including a solar cooking range, a set of the cooking utensils and a solar heat collector filled with ;heat storage and conducting material which can be used with the present invention;
Fig. 2 is a perspective view that illustrates schematically a set of solar cooking appliances including the backup electric heating elements, operation parameter indicating and controlling system according to the present invention;
Fig. 3 is a schematic exemplary diagrams illustrates different solar hear collectors filled with heat storage and conducting materials that can be used with the present invention;

### DETAILED DESCRIPTION

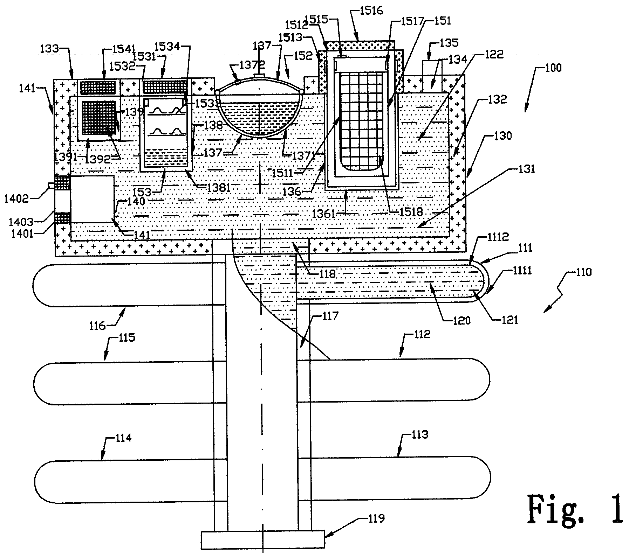

Referring to Fig. 1, a set of exemplary solar cooking appliances 100 is illustrated in schematic side view during use. Wherein the solar heat collector 110 is illustrated schematically in partial cross section and the solar cooking range 130 is illustrated schematically in vertical section. The solar cooking appliances 100 includes a solar heat collector 110 including the heat storage and conducting material 120 that filled in the solar heat collector 110; a solar cooking rangel30, the heat storage conducting material 122 that filled in the cooking range; the solar cooking utensils 151, 152, 153 and accessories.

Solar heat collector may be any kind of solar heat collector that can heat the heat storage and conducting material 120 or 122 to the temperature higher than the water boiling temperature. In Fig. 1, the solar heat collector is a group of modular evacuated- tube solar heat collectors 111, 112, 113, 114, 115 and 116 that extended their one open ends into a conflux tube 117 and are mounted in a parallel row having two ends 118 and 119. Depending on cooking requirement, the group of modular evacuated-tube solar heat collectors may be mounted in other shapes like a cone column etc. The number of the tubes may be from 1 to many. It is also depended on the cooking demand. The one end 119 of the solar heat collector 110 is closed and another end 118 is an open end and extended into the enclosed compartment 131 of the solar range 130. [0038] The evacuated-tube solar heat collectors 111, (112-116 are the same), has transparent outer layer 1111 and inner layer 1112 and evacuated in between. The inner layer 1112 has a heat absorbing coating that does not show in the Fig. The evacuated-tube solar heat collector can be purchase in market for solar heating water.

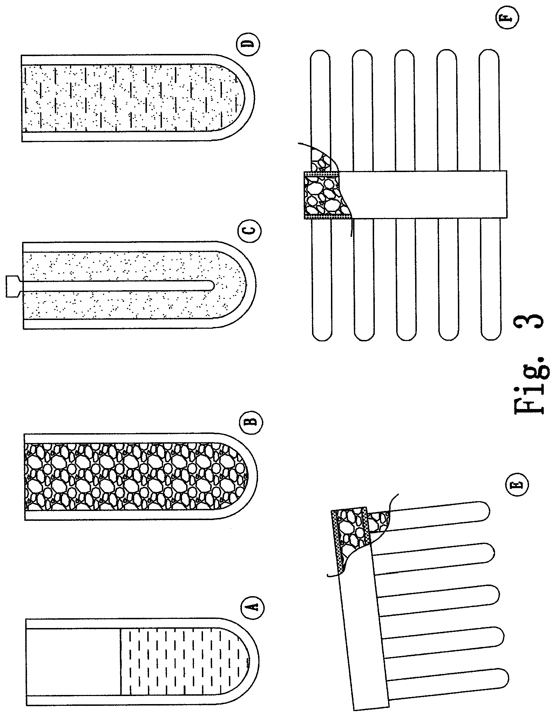

The solar heat collector that can be used for solar cooking appliance can be in many different structures such. They will be illustrated schematically in Fig. 3.

The evacuated-tube solar heat collector is made of glass. In case the glass tube is broken, the glass piece is dangers for the user. So the solar heat collector has a transparent plastic cover for safety reason. (It is not shown in Fig. 1). The transparent plastic cover can be either the mantles for each tube or a protective cover for an entire collector panel. But the plastic protective mantles may reduce the efficiency of the solar heat collector. So an evacuated toughened-glass tube solar heat collector is a better solution.

The heat storage and conducting material 120 is field in the solar heat collector 110. hi this case it is sand. The heat storage and conducting material 122 is field in the enclosed compartment 131 of the solar cooking range 130. In this case, it is sand too. A heat transferring material 121 is filled in both solar heat collector 110 and solar cooking range 130. In this case it is heating oil. The heating oil 121 transfers the solar heat by liquid circulating. In fact, we can also treat heating oil as a heat storage and conduction material. In this case, the heat storage and conducting material 120 and 122 are a combination material of sand and heating oil.

The requirements of heat storage and conducting material are as following: high ratio heat capacity, high heat conductivity, safe for use, cheap and easy to get. So it is not necessary for the solar heat collector 110 to use only the materials mentioned above. There are many materials can become the heat storage and conducting materials whatever it is solid, liquid, chemical material or it is a combination of above mentioned materials. Each material has its advantages and disadvantages need us to consider. Following are some examples:

The quartz sand is a kind of ore. It is a safe, cheap, easy to get material, but its heat conductivity is low.

Graphite is a kind of ore too. It has good heat conductivity, but is more expensive than quartz.

Coal and turves are two kinds of fossil and have good heat conductivity, but their ratio heat capacity is not very good.

Metal (e.g. steel or copper) and alloy (stainless steal or aluminum alloy) have a good heat conductivity and are easy to manufacture in different shapes, but they are expensive.

Sand and soil are easy to get and very cheap, but the components of sand and soil are varied from one place to another;

Water and oil are two typical liquid heat storage and conducting materials. The flowing liquid transfers the heat easily. The boiling temperature of water is lower than many oils. The water under high pressure can have high boiling temperature for using in solar cooking appliances.

Many kind of cooking oils such as colza, bean oil, peanut oil, tea-seed oil are safe for eat. They have the temperature higher than water boiling temperature. They are good to be the heat storage and conducting materials. But they are expensive and are the human food, so they should not be used widely.

The petroleum and its products such as heating oil, fuel oil, transformer oil and diesel have much higher boiling temperature than water. They are cheaper than cooking oils and are good heat transferring materials too. One of the disadvantages of these kinds of oils is not safe when the solar cooking appliance has an electric heat element. Further more some volatilized materials of these kinds of oils may be not good for hearth.

Some chemical or phase change heat storage materials may also be considered. For example, to add the water in Cao and to melt the paraffin by heating it are the ways to store the heat.

The combination of two kinds of above mentioned materials are often used. For example plumbaginous paraffin (graphite and paraffin) have good heat conductivity from graphite and phase change heat capability from paraffin. To fill the oil into san, like this case did, not only save the oil and make it more safety, but also have good heat transferring capability from the oil flow.

Referring to Fig. 3, a set of exemplary solar heat collectors are illustrated schematically in vertical sections.

Fig. 3A is a schematic vertical section view of an evacuated-tube solar heat collector filled with liquid heat storage and conduction material, e.g. water or oil. m some cases, water can also be a heat transferring medium for food cooking.

Fig. 3B is a schematic vertical section view of an evacuated-tube solar heat collector filled with solid heat storage and conduction material, e.g. ore stone or turves.

Fig. 3C is a schematic vertical section view of an evacuated-tube solar heat collector filled with sand and having a heat tube or a heat conductor as the heat transferring medium.

Fig. 3D is a schematic vertical section view of an evacuated-tube solar heat collector filled with a combination of solid and liquid heat storage and conducting materials, e.g. quartz sand and cooking oil;

Fig. 3E is a schematic partial vertical section view of a group of modular evacuated-tube solar heat collectors that mounted in a vertical parallel raw;

Fig. 3F is a schematic partial vertical section view of a group of modular evacuated-tube solar heat collectors that mounted in a horizontal parallel raw;

When set up a solar cooking appliance, not only these kinds of solar heat collectors but also more kinds of their varieties and combinations can be selected and used.

The solar range 130 includes an enclosed compartment 131 wherein the heat storage and conducting material is filled, the heat insulation layer 132, cooktop 133, a hole 134 on the cooking top with a fitting 135. Within the range 130, several chambers are arranged. They are 136, 137, 138 and 139.

The heat storage and conducting material has been discussed in details before. They can be used in the heat range too. The enclosed compartment 131 is closed by metal, e.g. stainless steel plate. It also can be steel, copper or aluminum alloy. They are easy for processing and easy to make an airtight box. It is important for use as a liquid container.

For the economy reason, a cheaper material such as ceramic, concrete, brick or even soil can replace the metal material.

The heat-insulated layer on the surface of the solar cooking range is a heat-insulated coating, e.g. ceramic coating in this case. It also can be a removable heat insulated greatcoat.

A cooktop 133 covers the top of the range on the surface of the heat insulation coat,

A smaller closed part 140, usually named as oven, is located in the solar cooking range 130. The oven 140 is closed by heat conductive metal 141, e.g. stainless steel or copper sheet, and surrounded by heat storage and conducting material 122 (not shown in Fig.). The oven 140 has a heat insulated door 1401 with a watching eye 1403 at a side wall of said solar cooking range and a handle 1402.

The oven 140 further includes a removable drawer (not shown in Fig. 1) filled with heat storage and conducting material 122. It locates in the oven 140 when the oven is out of service for adding the heat capacitance of the range. [0068] In the solar cooking range 130, there are chambers 136, 137, 138, 139 wherein the cooking utensils are mosaiced for food cooking. These chambers are formed within the heat storage and conducting material 122. In Fig. 1, we can see that the walls 1361, 1381 and 1391 of chambers 136, 138 and 139 are in cylinder bucket shape, and 1371 is in hemisphere shape. The chambers have their open tops on the cooktop 133. The cooking chambers 136, 137, 138, 139 are enclosed by heat conductive material, e.g. stainless steal or copper for separating the heat storage and conducting material from the cooking utensil. The removable parts 1516, 1521(not shown in Gig.1), 1531, 1541 cover the chambers 136, 137, 138 and 139 for heat insulation purpose. There are four heat insulation blocks prepared for each chamber (in Fig.1 only 1392 is shown). They are prepared for inserting in the chambers when some cooking chambers are out of service. The heat insulation block is taken out when a chamber is in use.

In Fig.1, the coking utensils 151, 152, 153 at the solar cooking range 130 are the representatives of the solar cooking utensils.

The utensil 151 is a deep fryer in cylinder bucket shape. A fry basket 1518 is located inside of the utensil. Its lower part inlays in cooking chamber 136 and its wall 1511 has a closed heat connection with the chamber wall 1361. The upper part of utensil 151 is heat insulated by a heat insulation greatcoat 1513. A heat insulation cover 1516 covers the lid 1515. There is a detachable handle 1517 inside of utensil 151.

The utensil 152 is a pot or wok in hemisphere shape to match the size and shape of the chamber 1371. It is inlayed fully in the chamber 137. It has a two layers toughness glass lid 1373 with a hole 1372 for steam leaking.

The utensil 153 is a steamer in cylinder bucket shape. A two layers steamer basket 1533 is arranged within the steamer. It inlays in cooking chamber 138 and has a closed heat connection with the chamber wall 1381. A heat insulation cover 1531 covers the lid 1532. There is a detachable handle 1534 inside of utensil 153.

Based on above detailed descriptions, we can find that common features of these solar cooking utensils are as follows:
A. The body of the utensil is mainly in cylinder bucket shape or in hemisphere shape.
B. The utensils are inlayed fully or partially in the cooking chambers of solar cooking range and have a closed heat connection with the chamber walls.
C. The utensil's parts are heat insulated that are out of the chamber,.
D. The lid of the utensil is heat insulated, either by a cover or has two layers.

In this case, the heat transferring medium is heating oil 121 as mentioned before. One open end 118 of solar heat collector 110 is extends into solar cooking range 130. The heat transferring material, heating oil 121 is connected and submerged in the sands 120 and 122. It transfers the solar heat from 121 to 122. Further more, the liquid heat transferring medium heating oil circulates automatically in solar heat collector 110 and the enclosed compartment 131 of range 130. The oil is a very efficient heat-transferring medium.

In other cases, the solar heat collector may be a mounted panel, It may have two ends are extended into the range. It may also connect the one end or two ends through conduit(s) with the range and transfer the solar heat from solar heat collector 110 to solar cooking range 130.

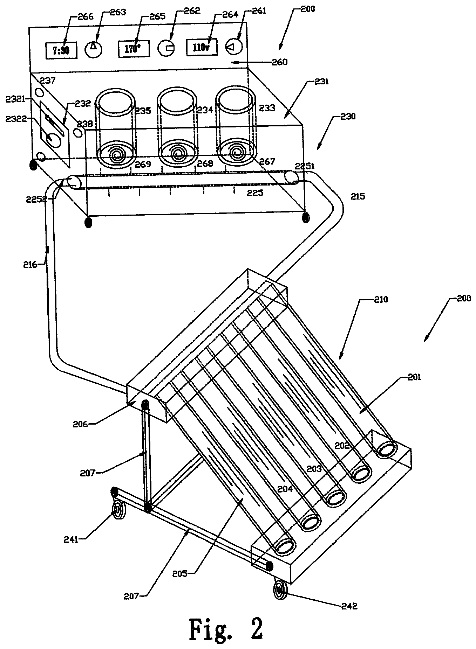

Fig. 2 is a perspective view that illustrates schematically a set of alternative solar cooking appliances 200 including the backup electric heating elements, operation parameter indicating and controlling system according to the present invention.

Referring to Fig. 2, a set of solar cooking appliances include a solar heat collector 210, a solar cooking range 230, two liquid conduits 215 and 216 connect the solar heat collector 210 with the heat exchanger 225 that is equipped in the solar cooking range 230. The pump and other accessories are not show in Fig.3.

The solar heat collector 210 is a panel mounted by 5 evacuated-tube solar heat collectors having its inlet 211 and outlet 212. The solar heat storage and conducting material 220 is filled in the solar heat collector 210. hi this case it is sand.

The solar cooking range 230 includes an enclosed compartment 231 with heat insulation coat. The solar heat storage and conducting material 222 is filled in the solar cooking range 230. In this case it is turves. Both sand and turves are not shown in Fig.2. An oven 232 is arranged in 231 with a handle 2321 and a watching eye 2322. Two electric heat elements (not show in Fig. 2) are equipped in the oven 232.

The oven 232 further includes an equipped upper electric heat element and/or a lower equipped electric heat element with power supply as a backup energy source, (not shown in Fig.2)

Three chambers 233, 234 and 235 are located in the solar cooking range 230 and surrounded by the heat storage and conducting material 222, i.e. turves. Three electric heat elements 267, 268 and 269 are equipped in the bottoms of the chambers 233, 234 and 235 respectively. The electric heat elements 267, 268 and 269 have their power supply, switchers 261, 262, and 263. They also have operation characteristic rotate indication devises 264, 265 and 266 and control system. The switchers 261, 262, and 263 and the operation feature characteristic rotating indicators 264, 265 and 266 including control system are arranged on the control panel 260.

Three chambers 233, 234 and 235 have the standard module size and shape. Each solar cooking utensil that used for the solar coking range 230, has a heat conductive coat having its inside size and shape matched with the outside size and shape of said utensil, and its outside size and shape matched the inside size and shape of said standard module cooking chamber in said solar cooking range. So that even each utensil may have different shape and size, when the food is cooked, every utensil with its coat can be located in any one of the standard chamber in the range 230. Further more each solar cooking utensil that used for the solar coking range 230, has a heat insulation coat having its inside size and shape matched with the outside size and shape of said utensil, and its outside size and shape matched the inside size and shape of said standard module cooking chamber in said solar cooking range. So that when the electric heat element is in operation, the heat element heats the utensil and cooks the food only. The electric power does not need to heat all the heat storage and conducting material in the solar cooking range 230.

A heat exchanger e.g. a fin tube 225 locates in the solar cooking range 230 and has two fittings 2251 and 2252 on the surface of the solar cooking range, The conduit 215 has one end connects to the fitting 2251 and the opposite end connects to an end 211 of the solar heat collector 210. The fitting 2252 connects to an end of the conduit of 216. The opposite end of 216 connects the end 212 of solar heat collector 210.

The liquid heat transferring medium, e.g. fuel oil, is filled in heat exchanger 225, conduits 215 and 216, It is permeated in the sand within solar heat collector 210. So the fuel oil is also the heat storage and conducting material of solar heat collector 210. The other accessories to circulate the liquid such pump are not discussed and shown in the Fig.2.

When the sunlight 201 shines on the solar heat collector, the collector absorbs the heat and stores the heat in the sand wherein. The heat transferring material, i.e. fuel oil pick up the heat and carry it through a close-loop 211-2251-2252-212-211 and transfers the heat to the turves in the solar cooking range 230. The cooking utensils 233, 234 and 235 pick up the solar heat through the heat connection between the walls of the chambers and utensils to cook the foods, When the solar power is not enough for the cooking, the electric heat elements 267, 268 and 269 as a backup power source provide the additional energy.

The solar cooking appliances 200 further include a fixing and supporting trestle 217 that arrange and support the five solar heat collectors at the proper locations and situations. It allows the adjustment of the incidence angle of the solar heat collector 210 to the sun light. Four wheels 271, 272, 273 and 274 are installed in the four bottom corners of the supporting trestle 217 for adjust the direction of the solar heat collector 210. A sundial (not shown in Fig. 2) is a cone bar. It attaches to the solar heat collector perpendicularly for indicating the incidence angle of sun light;

A light reflecting object (not shown in Fig. 2) is equipped under the evacuated-tube for focusing the surrounding sun light to the solar heat collector;

The solar cooking range 230 further includes an empty hot water tube buried in the heat storage and conducting material and has its inlet fitting 237 and out let fittings 238 at the wall of the range230. When the range is cooking, the tube is empty. After the cooking, cool water is flowed through the tube to use the remained heat in the range 230 for making hot water. [0089] Based on above detailed descriptions and discussions of the samples, other modifications will be apparent to those skilled in the art and, therefore, the invention is defined in the claims.

## Claims

1. A set of solar cooking appliances (200), comprising:
a solar heat collector (210) to collect and store solar heat;
a first heat storage and conducting material placed in the solar heat collector (210),
wherein said solar heat collector (210) can heat said first heat storage and conducting material to a temperature higher than the water boiling temperature;
a solar cooking range/stove (230) having a heat insulated and enclosed compartment (231) and a cooktop,
a second heat storage and conducting material placed in the heat insulated and enclosed compartment (231), and said solar cooking range/stove (230) thermally connected with said solar heat collector (210) to receive and store solar heat for food cooking,
a set of cooking chambers (233, 234, 235) arranged in said enclosed compartment (231) and located in said second heat storage and conducting material ; a heat-transferring medium thermally connecting said solar heat collector (210) to said second heat storage and conducting material in said solar cooking range to transfer the solar heat;
a set of solar cooking utensils (151, 152, 153) with heat insulated covers, said cooking utensils located in the cooking chambers (233, 234, 235) of said solar cooking range/stove (230);
**characterised in that**
an electric heat element (267, 268, 269) is arranged in said range/stove (230) to provide a backup energy source and electric heat storing, and a or the utensils (151, 152, 153) comprise a heat insulated coat having its internal size and shape matched with the external size and shape of said utensil and its external size and shape matched with the internal size and shape of the solar cooking chambers (233, 234, 235).

2. The solar cooking appliance according to claim 1, wherein said solar heat collector (210) is selected from a group of:
an evacuated-tube solar heat collector,
a plurality of evacuated solar heat collector,
a group of modular evacuated-tube solar heat collectors that are mounted in a certain shape,
an evacuated-tube solar heat collector having one open end,
an evacuated-tube solar heat collector having two open ends,
a solar heat collector having one open end extended into the solar cooking range, and
a solar heat collector having two open ends extended into the solar cooking range/stove.

3. The solar cooking appliance according to claim 1, wherein said first and second solid heat storage and conducting materials (220, 222) is selected from the group of:
a solid chemical heat storage material,
an ore,
a metal,
sand,
a salt,
soil,
a quartz sand,
CaO,
a paraffin,
a turves,
a graphite,
a phase change material, and
plumbaginous paraffin (graphite and paraffin).

4. The solar cooking appliance according to claim 1, wherein said heat transferring medium is selected from the group of:
an internal wall of said solar heat collector (210),
an internal wall of said solar cooking range/stove (230),
a heat tube,
a heat tube with conductive fins,
a heat conductor,
a metal conductor,
a copper conductor,
an aluminium conductor,
a liquid transferring material,
a liquid conduit,
an oil,
a cooking oil,
a colza oil,
a bean oil,
a petroleum oil,
a heating oil,
high pressured water,
a solid heat storage and conducting material with liquid,
said first heat storage and conducting material (220);
said second heat storage and conducting material (222), and
a heat exchanger (225) in the solar cooking range/stove (230).

5. The solar cooking appliance according to claim 1, wherein said solar cooking utensil (151, 152, 153) is selected from a group of:
a utensil having a wall connected to the second heat storage and conducting material (222),
a utensil having a wall connected to the heat transferring medium,
an utensil sized to fit the size and shape of said cooking chamber (233, 234, 235) in the solar cooking range/stove (230),
a utensil made of a material selected from the group of: a metal, a glass, a ceramic, a plastic, a synthetic material, a plant fibre, a stainless steel, a bag made of a material selected from the group including a metal, a paper, a plastic,
a membrane/foil for wrapping or covering a food for solar cooking,
a membrane/foil for wrapping or covering a food for solar cooking made of a material selected from the group of a metal, a paper, a plastic, a perforated basket for steam cooking a food,
a fryer with a wire mesh for frying and drain a food,
a whisker net to press the food sheet close to an internal wall of said utensil for food roasting and baking,
a wok/pot wherein food and water are arranged for a food braising or boiling,
a pan wherein one or more small frying pan(s) in parallel suspended in the utensil for fry, sauté or brown a food,
a utensil having a lower part and a upper part, wherein said lower part is sized to fit a shape and size of said cooking chamber (233, 234, 235) and the upper part having a heat insulated greatcoat,
a utensil having a two layer toughness glass lid, and
a utensil having a heat conductive coat sized to fit the size and shape of the solar cooking chamber (233, 234, 235).

6. The solar cooking appliance according to claim 1, further comprises an accessory selected from the group of:
a fixing and supporting trestle (217) for arranging and supporting parts of the solar cooking appliance (200), and said trestle (217) further comprising a structure selected from a group of:
a structure allowing the adjustment of an incidence angle of the solar heat collector (210) to sun light,
a light reflecting object to focus surrounding sun light to the solar heat collector (210),
a sundial attached to the solar heat collector (210) perpendicularly for showing the angle of the sun light,
a suitcase wherein the elements of the solar cooking appliance (200) are arranged and packaged toform a portable solar cooking appliance,
a measuring and indicating devise for said electric heat element (267, 268, 269) ;
a measuring and controlling system for said electric heat element (267, 268, 269),
a hot water tube ,
a transparent protective cover protecting said evacuated tube solar heat collector for safety reasons,
a transparent plastic protective mantle protecting said evacuated tube solar hear collector,
a heat conductive coat having a first side connected to an external side of the utensil and a second side to a chamber wall of the solar cooking range/stove (230).

7. The solar cooking appliance according to claim 1, wherein said solar cooking range/stove (230) further
comprises an accessory selected from the group of:
a structure for connecting the cooking range/stove (230) with the heat transferring medium,
a heat exchanger (225),
a pump,
a heat insulated coating on the surface of said enclosed compartment (231),
a removable heat insulation greatcoat,
a structure for breathing and expansion of the second heat storage and conducting material within said enclosed compartment (231) of the solar cooking range/stove (230),
a receiving fitting for receiving a heat tube from the solar heat collector (210),
a chamber enclosed by a heat conductive material for separating the heat storage and conducting material from the cooking utensil,
a modular standard chamber with a modular standard utensil,
an oven (232) with a door enclosed by a heat conductive material and surrounded by second heat storage an conducting material, a set of modular standard size cooking chambers,

8. The solar cooking appliance according to claim 1, wherein said enclosed compartment (231) is made of a material selected from the group of: a heat conductive material, a metal, a steel, a copper, an alloy, a stainless steel, an aluminium alloy, a heat resistant material, a ceramic, a concrete, a brick, a soil ,and any hybrid combination of these materials.

9. The solar cooking appliance according to claim 1, wherein said chamber (233, 234, 235) is selected from the group of: a chamber enclosed by a heat conductive material for separating the heat storage and conducting material from the cooking utensil,
a chamber having a shape selected from a group of cylinder bucket shape and hemisphere shape,
a chamber having a shape and size fixed to match the size and shape of a said utensil,
a group of cooking chambers, wherein every cooking chamber has a standard module size and shape,
a chamber having a removable heat insulation cover,
a chamber having a removable heat insulation part for fully filling the chamber,
a chamber having an electric heat element at the bottom of chamber to form a solar cooking appliance fueled mainly solar energy and also fueled electric power as a backup energy source.

## Patentansprüche

1. Satz von Solarkochgeräten (200), der Folgendes umfasst:
einen Solarwärmekollektor (210) zum Einfangen und Speichern von Solarwärme;
ein erstes Wärmespeicher- und -leitmaterial, das in dem Solarwärmekollektor (210) platziert ist,
wobei der genannte Solarwärmekollektor (210) das genannte erste Wärmespeicher- und -leitmaterial auf eine Temperatur erhitzen kann, die höher ist als die Wassersiedetemperatur;
einen Solarkochherd/-ofen (230) mit einem wärmeisolierten und geschlossenen Gehäuse (231) und einer Kochfläche,
ein zweites Wärmespeicher- und -leitmaterial, das in dem wärmeisolierten und geschlossenen Gehäuse (231) platziert ist, wobei der genannte Solarkochherd/-ofen (230) mit dem genannten Solarwärmekollektor (210) thermisch verbunden ist, um Solarwärme zum Kochen von Lebensmittel zu empfangen und zu speichern,
einen Satz Kochkammern (233, 234, 235), der in dem genannten geschlossenen Gehäuse (231) angeordnet ist und sich in dem genannten zweiten Wärmespeicher- und - leitmaterial befindet;
ein Wärmeübertragungsmedium, das den genannten Solarwärmekollektor (210) thermisch mit dem genannten zweiten Wärmespeicher- und -leitmaterial in dem genannten Solarkochherd verbindet, um die Solarwärme zu übertragen;
einen Satz Solarkochutensilien (151, 152, 153) mit wärmeisolierten Deckeln, wobei sich die genannten Kochutensilien in den Kochkammern (233, 234, 235) des genannten Solarkochherdes/-ofens (230) befinden;
**dadurch gekennzeichnet, dass**
ein Elektroheizelement (267, 268, 269) in dem genannten Herd/Ofen (230) angeordnet ist, um eine(n) Reserveenergiequelle und Elektroheizspeicher bereitzustellen, und ein Utensil oder die Utensilien (151, 152, 153) einen wärmeisolierten Überzug umfasst/umfassen, dessen interne Größe und Form zur externen Größe und Form des genannten Utensils passen und dessen externe Größe und Form zur internen Größe und Form der Solarkochkammern (233, 234, 235) passen.

2. Solarkochgerät nach Anspruch 1, wobei der genannte Solarwärmekollektor (210) ausgewählt ist aus der folgenden Gruppe:
einem Vakuumröhren-Solarwärmekollektor,
mehreren evakuierten Solarwärmekollektoren,
einer Gruppe von modularen Vakuumröhren-Solarwärmekollektoren, die in einer bestimmten Form montiert sind,
einem Vakuumröhren-Solarwärmekollektor mit einem offenen Ende,
einem Vakuumröhren-Solarwärmekollektor mit zwei offenen Enden,
einem Solarwärmekollektor mit einem offenen Ende, das sich in den Solarkochherd erstreckt, und
einem Solarwärmekollektor mit zwei offenen Enden, die sich in den Solarkochherd/-ofen erstrecken.

3. Solarkochgerät nach Anspruch 1, wobei das genannte erste und zweite feste Wärmespeicher- und -leitmaterial (220, 222) ausgewählt sind aus der folgenden Gruppe:
einem festen chemischen Wärmespeichermaterial,
einem Erz,
einem Metall,
Sand,
einem Salz,
Boden,
einem Quarzsand,
CaO,
einem Paraffin,
einer Sode,
einem Graphit,
einem Phasenwechselmaterial, und
graphithaltigem Paraffin (Graphit und Paraffin).

4. Solarkochgerät nach Anspruch 1, wobei das genannte Wärmeübertragungsmedium ausgewählt ist aus der folgenden Gruppe:
einer Innenwand des genannten Solarwärmekollektors (210),
einer Innenwand des genannten Solarkochherds/-ofens (230),
einem Wärmerohr,
einem Wärmerohr mit leitenden Rippen,
einem Wärmeleiter,
einem Metallleiter,
einem Kupferleiter,
einem Aluminiumleiter,
einem Flüssigkeitsübertragungsmaterial,
einer Flüssigkeitsleitung,
einem Öl,
einem Kochöl,
einem Rapsöl,
einem Bohnenöl,
einem Petroleumöl,
einem Heizöl,
Hochdruckwasser,
einem festen Wärmespeicher- und -leitmaterial mit Flüssigkeit,
dem genannten ersten Wärmespeicher- und -leitmaterial (220);
dem genannten zweiten Wärmespeicher- und -leitmaterial (222), und
einem Wärmetauscher (225) in dem Solarkochherd/-ofen (230).

5. Solarkochgerät nach Anspruch 1, wobei das genannte Solarkochutensil (151, 152, 153) ausgewählt ist aus der folgenden Gruppe:
einem Utensil mit einer Wand, die mit dem zweiten Wärmespeicher- und - leitmaterial (222) verbunden ist,
einem Utensil mit einer Wand, die mit dem Wärmeübertragungsmedium verbunden ist,
einem Utensil, das so bemessen ist, dass es zur Größe und Form der genannten Kochkammer (233, 234, 235) in dem genannten Solarkochherd/-ofen (230) passt,
einem Utensil aus einem Material, ausgewählt aus der Gruppe bestehend aus einem Metall, einem Glas, einer Keramik, einem Plastik, einem synthetischen Material, einer Pflanzenfaser, einem Edelstahl,
einem Beutel aus einem Material, ausgewählt aus der Gruppe bestehend aus einem Metall, einem Papier, einem Plastik,
einer Membran/Folie zum Umwickeln oder Abdecken eines Lebensmittels für solares Kochen,
einer Membran/Folie zum Umwickeln oder Abdecken eines Lebensmittels für solares Kochen bestehend aus einem Material, ausgewählt aus der Gruppe bestehend aus einem Metall, einem Papier, einem Plastik,
einem perforierten Korb zum Dampfgaren eines Lebensmittels,
einem Frittierer mit einem Drahtgeflecht zum Frittieren und Abgießen eines Lebensmittels,
einem Whisker-Netz zum Pressen der Lebensmittelbahn dicht an eine Innenwand des genannten Utensils zum Rösten und Backen des Lebensmittels,
einem Wok/Topf, in dem Lebensmittel und Wasser zum Schmoren oder Sieden eines Lebensmittels angeordnet sind,
einer Pfanne, in der eine oder mehrere kleine Bratpfannen parallel in dem Utensil zum Frittieren, Sautieren oder Bräunen eines Lebensmittels aufgehängt sind,
einem Utensil mit einem unteren Teil und einem oberen Teil, wobei der genannte untere Teil so bemessen ist, dass er zu Form und Größe der genannten Kochkammer (233, 234, 235) passt, und der obere Teil einen wärmeisolierten Mantel aufweist,
einem Utensil mit einem zweilagigen Verbundglasdeckel, und
einem Utensil mit einem wärmeleitenden Überzug, so bemessen, dass er zu Größe und Form der Solarkochkammer (233, 234, 235) passt.

6. Solarkochgerät nach Anspruch 1, das ferner ein Zubehörteil umfasst, ausgewählt aus der folgenden Gruppe:
einem Befestigungs- und Traggestell (217) zum Anordnen und Tragen von Teilen des Solarkochgeräts (200), wobei das genannte Gestell (217) ferner eine Struktur aufweist, die ausgewählt ist aus der folgenden Gruppe:
einer Struktur, die das Justieren eines Einfallswinkels des Solarwärmekollektors (210) zum Sonnenlicht zulässt,
einem lichtreflektierenden Objekt zum Fokussieren von umgebendem Sonnenlicht auf den Solarwärmekollektor (210),
einer lotrecht am Solarwärmekollektor (210) angebrachten Sonnenuhr zum Anzeigen des Winkels des Sonnenlichts,
einem Koffer, in dem die Elemente des Solarkochgeräts (200) angeordnet und verpackt sind, um ein tragbares Solarkochgerät zu bilden,
einer Mess- und Anzeigevorrichtung für das genannte Elektroheizelement (267, 268, 269);
einem Mess- und Steuersystem für das genannte Elektroheizelement (267, 268, 269),
einem Heißwasserrohr,
einer transparenten Schutzabdeckung, die den genannten Vakuumrohr-Solarwärmekollektor aus Sicherheitsgründen schützt,
einem transparenten Plastikschutzmantel, der den genannten Vakuumrohr-Solarwärmekollektor schützt,
einem wärmeleitenden Überzug mit einer ersten Seite, die mit einer Außenseite des Utensils verbunden ist, und einer zweiten Seite zu einer Kammerwand des Solarkochherds/-ofens (230).

7. Solarkochgerät nach Anspruch 1, wobei der genannte Solarkochherd/-ofen (230) ferner ein Zubehörteil umfasst, ausgewählt aus der folgenden Gruppe:
einer Struktur zum Verbinden des Kochherds/-ofens (230) mit dem Wärmeübertragungsmedium,
einem Wärmetauscher (225),
einer Pumpe,
einem wärmeisolierten Überzug auf der Oberfläche des genannten umschlossenen Gehäuses (231),
einem entfernbaren Wärmeisoliermantel,
einer Struktur zum Atmen und Expandieren des zweiten Wärmespeicher- und - leitmaterials in dem genannten geschlossenen Gehäuse (231) des Solarkochherds/-ofens (230),
einem Aufnahmeanschluss zum Aufnehmen eines Wärmerohrs von dem Solarwärmekollektor (210),
einer Kammer, umschlossen von einem wärmeleitenden Material zum Trennen des Wärmespeicher- und -leitmaterials von dem Kochutensil,
einer modularen Standardkammer mit einem modularen Standardutensil,
einem Ofen (232) mit einer Tür, die von einem wärmeleitenden Material umschlossen und von einem zweiten Wärmespeicher- und -leitmaterial umgeben ist,
einem Satz von modularen Kochkammern von Standardgröße.

8. Solarkochgerät nach Anspruch 1, wobei das genannte umschlossene Gehäuse (231) aus einem Material gefertigt ist, das ausgewählt ist aus der folgenden Gruppe: einem wärmeleitenden Material, einem Metall, einem Stahl, einem Kupfer, einer Legierung, einem Edelstahl, einer Aluminiumlegierung, einem wärmebeständigen Material, einer Keramik, einem Beton, einem Stein, einem Boden und einer beliebigen hybriden Kombination aus diesen Materialien.

9. Solarkochgerät nach Anspruch 1, wobei die genannte Kammer (233, 234, 235) ausgewählt ist aus der folgenden Gruppe: einer Kammer, die von einem wärmeleitenden Material umschlossen ist, um das Wärmespeicher- und -leitmaterial von dem Kochutensil zu trennen,
einer Kammer mit einer Form, die ausgewählt ist aus einer Gruppe aus zylindrischer Eimerform und Halbkugelform,
einer Kammer mit einer Form und Größe passend zu Größe und Form eines genannten Utensils,
einer Gruppe von Kochkammern, wobei jede Kochkammer eine standardmäßige Modulgröße und -form hat,
einer Kammer mit einer entfernbaren Wärmeisolierabdeckung,
einer Kammer mit einem entfernbaren Wärmeisolierteil zum vollständigen Füllen der Kammer,
einer Kammer mit einem Elektroheizelement am Boden der Kammer zum Bilden eines Solarkochgeräts, das hauptsächlich mit Solarenergie gespeist wird und auch mit elektrischer Leistung als Reserveenergiequelle gespeist wird.

## Revendications

1. Ensemble d'appareils de cuisson solaires (200) comprenant :
un collecteur solaire thermique (210) pour recueillir et stocker la chaleur solaire ;
un premier matériau de stockage et de conduction de chaleur placé dans le collecteur solaire thermique (210)
dans lequel ledit collecteur solaire thermique (210) peut chauffer ledit premier matériau de stockage et de conduction de chaleur jusqu'à une température supérieure à la température d'ébullition de l'eau ;
une cuisinière/fourneau solaire (230) doté d'un compartiment thermiquement isolé et enfermé (231) et une table de cuisson,
un deuxième matériau de stockage et de conduction de chaleur placé dans le compartiment thermiquement isolé et enfermé (231), ladite cuisinière/fourneau solaire (230) étant thermiquement reliée audit collecteur solaire thermique (210) pour recevoir et stocker la chaleur solaire pour la cuisson d'aliments ;
un ensemble de chambres de cuisson (233, 234, 235) placé dans ledit compartiment enfermé (231) et situé dans ledit deuxième matériau de stockage et de conduction de chaleur ;
un support de transfert de chaleur reliant thermiquement ledit collecteur solaire thermique (210) audit deuxième matériau de stockage et de conduction de chaleur dans ladite cuisinière solaire pour transférer la chaleur solaire ;
un ensemble d'ustensiles de cuisson solaires (151, 152, 153) dotés de couvercles thermiquement isolés, lesdits ustensiles étant placés dans les chambres de cuisson (233, 234, 235) de ladite cuisinière/fourneau solaire (230) ;
**caractérisé en ce que**
un élément thermique électrique (267, 268, 269) est placé dans ladite cuisinière/fourneau solaire (230) pour fournir une source d'énergie et de stockage de chaleur électrique d'appoint, et un ou les ustensiles (151, 151, 153) comprennent une enveloppe isolée thermiquement dont la taille et la forme internes correspondent à la taille et à la forme externes dudit ustensile et sa taille et forme externes correspondent à la taille et à la forme externe des chambres de cuisson solaires (233, 234, 235).

2. Appareil de cuisson solaire selon la revendication 1, dans lequel ledit collecteur solaire thermique (210) est sélectionné dans le groupe consistant en :
un collecteur solaire thermique à tubes sous vide,
une pluralité de collecteurs solaires thermiques sous vide.
un groupe de collecteurs solaires thermiques à tubes sous vide modulaires qui sont montés en une certaine forme,
un collecteur solaire thermique à tubes sous vide ayant une extrémité ouverte,
un collecteur solaire thermique à tubes sous vide ayant deux extrémités ouvertes,
un collecteur solaire thermique ayant une extrémité ouverte s'étendant dans la cuisinière solaire, et
un collecteur solaire thermique ayant deux extrémités ouvertes s'étendant dans la cuisinière/fourneau solaire.

3. Appareil de cuisson solaire selon la revendication 1, dans lequel lesdits premier et deuxième matériaux de stockage et de conduction de la chaleur solides (220, 22) sont sélectionnés dans le groupe consistant en :
un matériau de stockage de chaleur constitué d'un composé chimique solide,
un minerai,
un métal,
un sable,
un sel,
de la terre
un sel de quartz,
du CaO,
une paraffine,
un tapis de gazon
un graphite,
un matériau de changement de phase, et
une paraffine plombagineuse (graphite et paraffine).

4. Appareil de cuisson solaire selon la revendication 1, dans lequel ledit support de transfert de chaleur est sélectionné dans le groupe consistant en :
une paroi interne dudit collecteur solaire thermique (210),
une paroi interne de ladite cuisinière/fourneau (230)
un tube de chaleur,
un tube de chaleur avec des ailettes conductrices,
un conducteur de chaleur,
un conducteur métallique,
un conducteur en cuivre,
un conducteur en aluminium,
un matériau de transfert de liquide,
un conduit de liquide,
une huile,
une huile de cuisson,
une huile de colza,
une huile de soja
une huile de pétrole,
une huile de chauffage,
de l'eau haute pression,
un matériau de stockage et de conduction de chaleur solide avec du liquide, ledit premier matériau de stockage et de conduction de chaleur (220) ;
ledit deuxième matériau de stockage et de conduction de chaleur (222), et
un échangeur thermique (225) dans la cuisinière/fourneau solaire (230).

5. Appareil de cuisson solaire selon la revendication 1, dans lequel ledit ustensile de cuisson solaire (151, 152, 153) est sélectionné dans le groupe consistant en :
un ustensile ayant une paroi reliée au deuxième matériau de stockage et de conduction de chaleur (222),
un ustensile ayant une paroi reliée au support de transfert de chaleur,
un ustensile dimensionné pour s'adapter à la taille et à la forme de ladite chambre de cuisson (233, 234, 235) dans la cuisinière/fourneau solaire (230).
un ustensile fait d'un matériau sélectionné dans le groupe consistant en : un métal, du verre, une céramique, un plastique, un matériau synthétique, une fibre végétale, un acier inoxydable,
un sac fait d'un matériau sélectionné dans le groupe contenant un métal, du papier, un plastique, une membrane/film pour envelopper ou couvrir un aliment pour cuisson solaire,
une membrane/feuille pour envelopper ou couvrir un aliment pour cuisson solaire,
une membrane/feuille pour envelopper ou couvrir un aliment pour cuisson solaire faite d'un matériau sélectionné dans le groupe consistant en un métal, du papier, un plastique, un panier perforé pour cuire un aliment à la vapeur,
une friteuse avec un panier métallique pour faire frire et égoutter un aliment,
un balai pousseur pour presser la feuille pour aliments à proximité d'une paroi interne dudit ustensile pour le rôtissage et la cuisson d'aliments,
un wok/pot dans lequel les aliments et l'eau sont disposés pour une cuisson à l'étouffée ou par ébullition d'aliments,
une casserole dans laquelle une ou plusieurs petites poêles sont suspendues en parallèle dans l'ustensile pour faire frire, faire sauter ou faire griller un aliment,
un ustensile ayant une partie inférieure et une partie supérieure, dans lequel ladite partie inférieure est dimensionnée pour s'adapter à une taille et à une forme de chambre de cuisson (233, 234, 235) et la partie supérieure est dotée d'une capote thermiquement isolée, et
un ustensile doté d'un couvercle en verre trempé à deux couches, et
un ustensile doté d'une enveloppe conductrice de chaleur adaptée à la taille et à la forme de la chambre de cuisson solaire (233, 234, 235).

6. Appareil de cuisson solaire selon la revendication 1, comprenant en outre un accessoire sélectionné dans le groupe consistant en :
un tréteau de fixation et de support (217) pour disposer des parties de l'appareil de cuisson solaire (200) et servir de support à celles-ci, et ledit tréteau (217) comprenant par ailleurs une structure sélectionnées dans un groupe constitué de ce qui suit :
une structure permettant le réglage d'un angle d'incidence du collecteur solaire thermique (210) par rapport à la lumière solaire,
un objet reflétant la lumière pour concentrer la lumière solaire environnante sur le collecteur solaire thermique (210),
un cadran solaire fixé perpendiculairement au collecteur solaire thermique (210) pour montrer l'angle de la lumière solaire,
une mallette dans laquelle les éléments de l'appareil de cuisson solaire (200) sont disposés et emballés de manière à former un appareil de cuisson solaire portable,
un dispositif de mesure et de signalisation pour ledit élément chauffant électrique (267, 268, 269) ;
un système de mesure et de contrôle pour ledit élément chauffant électrique (267, 268, 269),
un tube d'eau chaude,
un couvercle de protection transparent protégeant ledit collecteur solaire thermique à tubes sous vide pour des raisons de sécurité,
une chemise de protection en plastique transparent protégeant ledit collecteur solaire thermique à tubes sous vide,
une enveloppe conductrice ayant un premier côté relié à un côté extérieur de l'ustensile et un deuxième côté à une paroi de chambre de la cuisinière/fourneau solaire (230).

7. Appareil de cuisson solaire selon la revendication 1, dans lequel ladite cuisinière/fourneau solaire (230) comprend par ailleurs un accessoire sélectionné dans le groupe consistant en :
une structure pour relier la cuisinière/fourneau solaire (230) à un support de transfert de chaleur,
un échangeur thermique (225)
une pompe,
un revêtement thermiquement isolé sur la surface dudit compartiment enfermé (231),
une capote d'isolation thermique amovible,
une structure pour la respiration et l'expansion du deuxième matériau de stockage et de conduction de chaleur à l'intérieur dudit compartiment enfermé (231) de la cuisinière/fourneau solaire (230),
un raccord de réception pour recevoir un tube chauffant à partir du collecteur solaire thermique (210),
une chambre couverte par un matériau conducteur de chaleur pour séparer le matériau de stockage et de conduction de chaleur de l'ustensile de cuisson,
une chambre standard modulaire avec un ustensile standard modulaire,
un four (232) avec une porte couverte par un matériau conducteur de chaleur et entourée par un deuxième matériau de stockage et de conduction de chaleur,
un ensemble de chambres de cuisson modulaires de taille standard.

8. Appareil de cuisson solaire selon la revendication 1, dans lequel ledit compartiment enfermé (231) est fait d'un matériau sélectionné dans le groupe consistant en : un matériau conducteur de chaleur, un métal, un acier, un cuivre, un acier inoxydable, un alliage d'aluminium, un matériau résistant à la chaleur, une céramique, un béton, une brique, de la terre et de toute combinaison hybride de ces matériaux.

9. Appareil de cuisson solaire selon la revendication 1, dans lequel ladite chambre (233, 234, 235) est sélectionnée dans le groupe consistant en : une chambre couverte par un matériau conducteur de chaleur pour séparer le matériau de stockage et de conduction de chaleur de l'ustensile de cuisson,
une chambre ayant une forme sélectionnée dans un groupe de forme cylindrique/en godet et de forme hémisphérique,
une chambre ayant une forme et une taille fixées pour correspondre à la taille et à la forme dudit ustensile,
un groupe de chambres de cuisson, dans lequel chaque chambre de cuisson a une taille et une forme modulaire standard,
une chambre ayant un couvercle d'isolation thermique amovible,
une chambre ayant une partie d'isolation thermique amovible pour remplir complètement la chambre,
une chambre ayant un élément chauffant électrique au fond de la chambre pour former un appareil de cuisson solaire alimenté principalement par de l'énergie solaire et également alimenté par de l'énergie électrique en tant que source d'énergie d'appoint.
